# EUROPEAN PATENT APPLICATION

(11) **EP 4 722 879 A1**
(43) Date of publication of application: **08.04.2026**
(21) Application number: 24814250.7
(22) Date of filing: 21.05.2024
(51) Int. Cl.: G06F 3/0484

(54) **INTERACTION METHOD AND APPARATUS, AND ELECTRONIC DEVICE AND STORAGE MEDIUM**

(30) Priority: 26.05.2023 CN 202310613211
(71) Applicant: Beijing Zitiao Network Technology Co., Ltd., Beijing 100190 (CN)
(72) Inventor: TANG, Yuxi, Beijing 100028 (CN); ZENG, Zhizheng, Beijing 100028 (CN); TANG, Bo, Beijing 100028 (CN)
(74) Representative: Grünecker Patent- und Rechtsanwälte PartG mbB
(86) International application number: PCT/CN2024/094455
(87) International publication number: WO 2024/245051

(57) **Abstract**

Provided in the embodiments of the present disclosure are an interaction method and apparatus, and an electronic device and a storage medium. The method comprises: receiving a preset trigger operation of the current user; and in response to the preset trigger operation, presenting update information of a collection set of the current user, wherein the update information comprises at least one of update prompt information and target updated content, the collection set is a general set of collected content of the current user, the update prompt information is presented at an associated position of a collection identifier corresponding to the collection set, and is used for prompting that there is updated content in the collection set, the target updated content is presented on a preset media content presentation page, and the preset media content presentation page is a presentation page of media content that is published by an associated user of the current user. **In** the embodiments of the present disclosure, by means of the technical solution, the interaction modes related to updated content in collected content of a user can be diversified.

## Description

This application claims the priority and benefits of Chinese patent application No.202310613211.1 filed on May 26, 2023, the entire disclosure of which is incorporated hereby reference as a part of the present application.

### TECHNICAL FIELD

Embodiments of the present disclosure relate to an interaction method and apparatus, an electronic device and a storage medium.

### BACKGROUND

At present, a user can favorite content and view their own favorites content in their personal pages. However, when there is updated content in the favorites content of the user, an interaction mode related to the updated content is relatively simple.

### SUMMARY

Embodiments of the present disclosure provide an interaction method and apparatus, an electronic device and a storage medium, so as to enrich an interaction mode related to updated content in favorites content of a user.

In a first aspect, an interaction method is provided by embodiments of the present disclosure. This method includes:
receiving a preset trigger operation of a current user; and
presenting update information of a favorites set of the current user in response to the preset trigger operation, wherein the update information includes at least one selected from the group consisting of update prompt information and target updated content, the favorites set is a complete set of favorites content of the current user, the update prompt information is presented at an associated position of a favorite identifier corresponding to the favorites set, the update prompt information is configured to prompt that updated content exists in the favorites set, the target updated content is presented within a preset media content presentation page, and the preset media content presentation page is a presentation page of media content published by an associated user of the current user.

In a second aspect, an interaction apparatus is also provided by embodiments of the present disclosure. This apparatus includes:
an operation receiving module, configured to receive a preset trigger operation of a current user; and
an information presentation module, configured to present update information of a favorites set of the current user in response to the preset trigger operation, wherein the update information includes at least one selected from the group consisting of update prompt information and target updated content, the favorites set is a complete set of favorites content of the current user, the update prompt information is presented at an associated position of a favorite identifier corresponding to the favorites set, the update prompt information is configured to prompt that updated content exists in the favorites set, the target updated content is presented within a preset media content presentation page, and the preset media content presentation page is a presentation page of media content published by an associated user of the current user.

In a third aspect, an electronic device is also provided by embodiments of the present disclosure. This electronic device includes:
one or more processors; and
a memory for storing one or more programs; when the one or more programs are executed by the one or more processors, the one or more processors implement the interaction method according to the embodiments of the present disclosure.

In a fourth aspect, a computer-readable storage medium is also provided by embodiments of the present disclosure. This computer-readable storage medium stores a computer program, and the program, when executed by a processor, is configured to implement the interaction method described in the embodiments of the present disclosure.

### BRIEF DESCRIPTION OF DRAWINGS

The above and other features, advantages and aspects of embodiments of the present disclosure will become more apparent by referring to the following detailed description when taken in conjunction with the accompanying drawings. Throughout the drawings, same or similar reference numerals indicate same or similar elements. It should be understood that the drawings are schematic, and the originals and elements are not necessarily drawn to scale.
FIG. 1 is a schematic flowchart of an interaction method provided by an embodiment of the present disclosure;
FIG. 2 is a schematic display diagram of first update prompt information provided by an embodiment of the present disclosure;
FIG. 3 is a schematic diagram of a preset media content presentation page provided by an embodiment of the present disclosure;
FIG. 4 is a schematic display diagram of a favorites folder panel provided by an embodiment of the present disclosure;
FIG. 5 is a schematic flowchart of another interaction method provided by an embodiment of the present disclosure;
FIG. 6 is a schematic display diagram of second update prompt information provided by an embodiment of the present disclosure;
FIG. 7 is a schematic display diagram of another first update prompt information provided by an embodiment of the present disclosure;
FIG. 8 is a schematic display diagram of third update prompt information provided by an embodiment of the present disclosure;

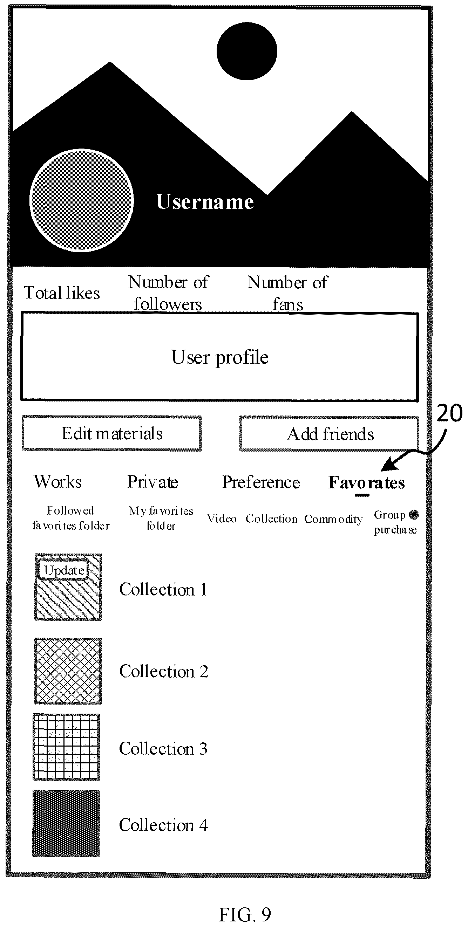

FIG. 9 is a schematic display diagram of a personal page provided by an embodiment of the present disclosure;
FIG. 10 is a structural block diagram of an interaction apparatus provided by an embodiment of the present disclosure; and
FIG. 11 is a schematic structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be embodied in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "include", "comprise" and their variants are open-ended including, that is, "including but not limited to". The term "based on" is "at least partially based on". The term "one embodiment" means "at least one embodiment". The term "another embodiment" means "at least one other embodiment". The term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order or interdependence of the functions performed by these devices, modules or units.

It should be noted that the modifications of "a", "an" and "a plurality of" mentioned in the present disclosure are schematic rather than limiting, and those skilled in the art should understand that unless the context clearly indicates otherwise, they should be understood as "one or more".

Names of messages or information exchanged among a plurality of apparatuses in the embodiments of the present disclosure are only used for illustrative purposes, and are not used to limit the scope of these messages or information.

It can be understood that before using the technical solutions disclosed in various embodiments of present disclosure, users should be informed of the types, scope of use, use scenarios, etc. of personal information involved in present disclosure in an appropriate way according to relevant laws and regulations and be authorized by users.

For example, in response to receiving the user's active request, prompt information is sent to a user to clearly remind the user that the requested operation will require obtaining and using the user's personal information. Therefore, the user can independently choose whether to provide personal information to software or hardware such as electronic devices, applications, servers or storage media that perform the operation of the technical solution of the present disclosure according to the prompt information.

As an optional but non-limiting implementation, in response to receiving the user's active request, the way to send the prompt information to the user can be, for example, a pop-up window, in which the prompt information can be presented in text. In addition, the pop-up window can also carry a selection control for the user to choose "agree" or "disagree" to provide personal information to the electronic device.

It can be understood that the above process of notifying and obtaining user authorization is only schematic, and does not limit the implementation of the present disclosure. Other ways to meet relevant laws and regulations can also be applied to the implementation of the present disclosure.

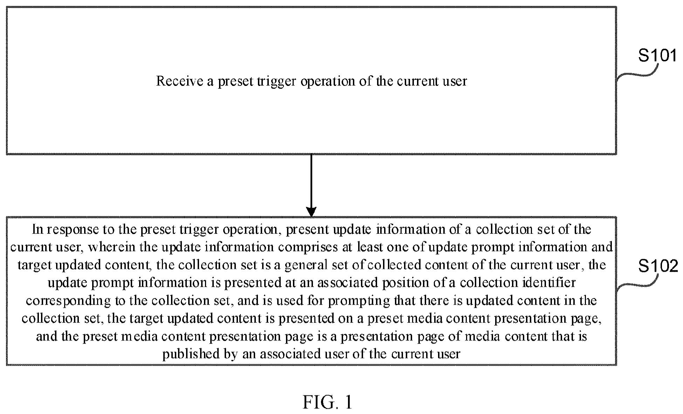

FIG. 1 is a schematic flowchart of an interaction method provided by an embodiment of the present disclosure. The method may be executed by an interaction apparatus. The apparatus may be implemented by software and/or hardware and may be configured in an electronic device, for example, in a mobile phone or a tablet computer. The interaction method provided by the embodiment of the present disclosure is applicable to scenes of presenting update information of a favorites set of a user. As shown in FIG. 1, the interaction method provided by this embodiment may include:
S101: receiving a preset trigger operation of a current user.

The current user may be considered as a user currently executing the preset trigger operation. The preset trigger operation may be a trigger operation for instructing the display of update information of a favorites set of a current user, such as a first display operation for a personal page of the current user, a fourth display operation for a preset media content presentation page, and/or a media content switching operation acting on the preset media content presentation page, and so on.

The first display operation may be understood as a trigger operation for instructing the display of the personal page of the current user, the fourth display operation may be understood as a trigger operation for instructing the display of the preset media content presentation page, and trigger modes of the first display operation and the fourth display operation may be flexibly set. The preset media content presentation page may be a presentation page of media content published by an associated user of the current user, such as a presentation page for presenting media content published by some or all of the associated users of the current user. The associated user may be understood as a user who has a preset association relationship with the current user, and the preset association relationship may be, for example, a friend relationship or a follow relationship, etc. The following description takes the preset association relationship as the follow relationship as an example. At this point, the associated user may be a user followed by the current user in a current application program. The preset media content presentation page may be a follow page, and the follow page may be configured to present a presentation page of media content published by a user followed by the current user.

In this embodiment, the current user can execute the preset trigger operation, and correspondingly, the current application program can receive the preset trigger operation executed by the current user.

S102: presenting update information of a favorites set of the current user in response to the preset trigger operation, wherein the update information includes at least one selected from the group consisting of update prompt information and target updated content, the favorites set is a complete set of favorites content of the current user, the update prompt information is presented at an associated position of a favorite identifier corresponding to the favorites set, the update prompt information is configured to prompt that updated content exists in the favorites set, the target updated content is presented within a preset media content presentation page, and the preset media content presentation page is a presentation page of media content published by an associated user of the current user.

The favorites set of the current user may be the complete set of the favorites content of the current user. The complete set may be understood as a first-level set. In other words, the complete set may be the highest-level set of the favorites content of the current user, and there is no higher-level set of favorites content than it. The user that has favorites content may have and only have one favorites set in the current application program. The favorites set may include one or more subsets, that is, one or more secondary-level sets. Different subsets may be used to favorite different themes and/or different types of content, which may be set as required. Exemplarily, the different subsets may include, for example, a subset of favorites folders created by the user, a subset of favorites folders followed by the user, and/or a subset of media content/places/group purchases/commodities/topics/hot spots/short plays favorited by the user, and so on.

The favorite identifier may be understood as an identifier of the favorites set, which may be a first-level identifier. The favorite identifier may have a secondary-level identifier corresponding to the one or more subsets. The favorite identifier may remain displayed on the personal page when the personal page is displayed. The first-level identifier (i.e., the favorite identifier) may be used to trigger the presentation of the favorites set, such as the presentation of content information of at least part of favorites content in the favorites set. The second-level identifier may be used to trigger the presentation of a corresponding subset in the favorites set, such as the presentation of the content information of at least part of the favorites content in the corresponding subset. The associated position of the favorite identifier may be understood as a position associated with a display position of the favorite identifier, such as a certain position around the favorite identifier.

The update prompt information may be information for prompting that updated content exists in the favorites set. The updated content of the favorites set/subset may be, for example, content newly added into the favorites set/subset since the current user last viewed the favorites set/subset, such as content newly which is added into the favorites set/subset since the current user last viewed the favorites set/subset, but not yet viewed by the user. Optionally, the newly added content may be content that is not added based on the trigger operation of the current user, such as content that is added to the favorites set without being based on the trigger operation of the current user, so as to avoid unnecessary update prompts to the user. The content newly added based on the trigger operation of the current user may be, for example, content newly added to the favorites set by the current user.

The target updated content may be certain updated content in the favorites set, which may be updated content located in any of subsets of the favorites set or updated content in a preset subset of the favorites set (such as a third subset).

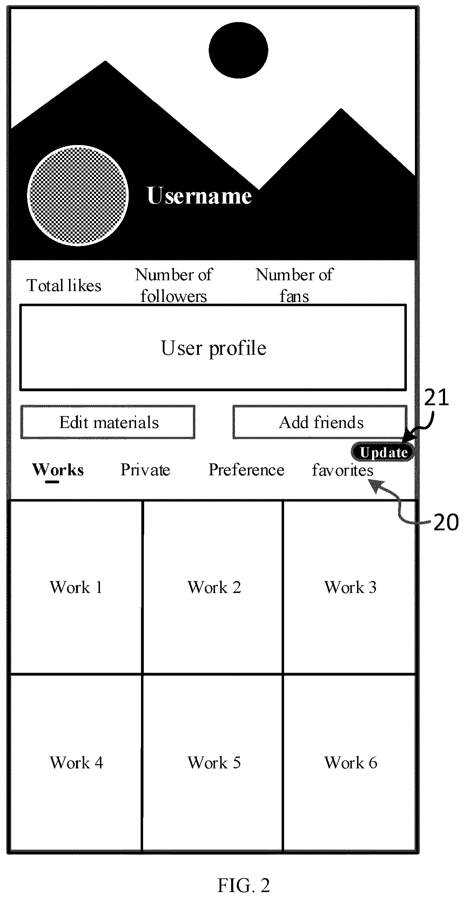

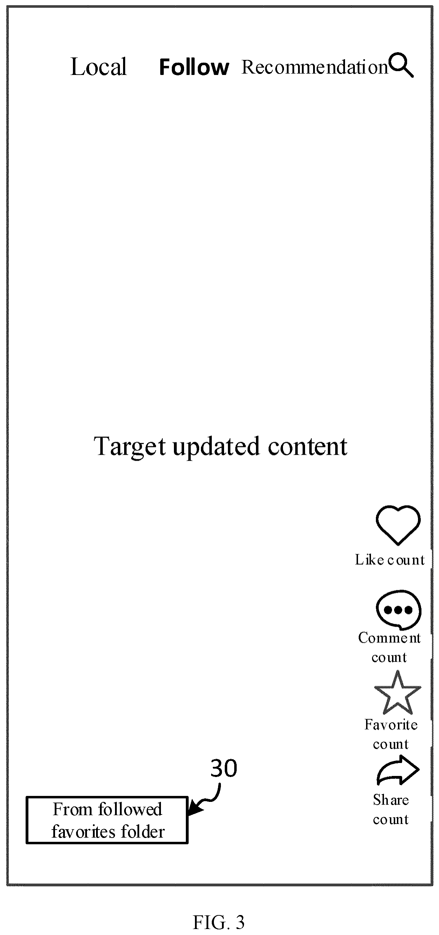

Specifically, when the preset trigger operation of the current user is received, the update information of the favorites set of the current user may be presented based on the preset trigger operation, for example, a favorite identifier 20 corresponding to the favorites set of the current user may be displayed on the personal page, and the update prompt information may be presented at the associated position of the favorite identifier 20, as shown in FIG. 2 (taking the display of first update prompt information 21 as an example); or, the target updated content in the favorites set of the current user is presented in the preset media content presentation page, as shown in FIG. 3 (taking the preset media content presentation page as an example of a follow page).

In this embodiment, the update prompt information of the favorites set may be presented at the associated position of the favorite identifier, and/or the target updated content in the favorites set may be presented in the preset media content presentation page for presenting the media content published by the associated user. Therefore, the user can quickly determine that updated content exists in the favorites set through the update prompt information, and/or can quickly view at least part of the updated content in the favorites set through the preset media content presentation page. The interaction modes when the user determines whether updated content exists in the favorites set and views the updated content in the favorites set can be enriched, and the interaction modes related to the updated content in the favorites content of the user can be further enriched. Furthermore, operations required for the user to determine whether updated content exists in the favorites set and to view the updated content in the favorites set can also be simplified, thus improving the user experience.

In some implementations, the preset trigger operation includes at least one selected from the group consisting of a fourth display operation for the preset media content presentation page and a preset media content switching operation acting on the media content presentation page, and the presenting update information of a favorites set of the current user includes: presenting the target updated content in the favorites set on the preset media content presentation page.

The target updated content may be updated content instructed to be presented by the preset trigger operation, that is, updated content in the favorites set presented in the preset media content presentation page in response to the currently received preset trigger operation. The preset media content switching operation may be a media content switching operation for instructing to switch the currently presented media content in the preset media content presentation page to certain updated content in the favorites set. Exemplarily, the preset media content presentation page can support the user to switch the currently presented media content in the preset media content presentation page by performing the media content switching operation. When the media content is switched and presented as certain updated content in the favorites set of the current user in response to the media content presentation operation performed by the user, the media content display operation may be considered as the preset media content display operation. The media content switching operation may be a trigger operation for instructing to switch the currently presented media content in the preset media content presentation page, and this embodiment does not limit a specific execution mode of the media content switching operation.

In the above embodiment, when one or more pieces of updated content exist in the favorites set of the user or a preset subset (such as the third subset) in the favorites set, the target updated content of the one or more pieces of updated content may be presented in the preset media content presentation page in response to the preset trigger operation, as shown in FIG. 3. Therefore, users can view the updated content in their favorites set in the preset media content presentation page without switching to the personal page and performing a series of trigger operations in the personal page for viewing, which can enrich viewing modes of the updated content in the favorites set, simplify the operations required for viewing the updated content in the favorites set, and further enrich functions of the preset media content presentation page.

Exemplarily, when the fourth display operation for the preset media content presentation page is received, the preset media content presentation page may be displayed, and the target updated content in the favorites set of the current user may be presented in the preset media content presentation page (for the case that the first content in a media content stream of the preset media content presentation page is the updated content in the favorites set); and/or when the preset media content switching operation acting on the preset media content presentation page is received, the currently presented media content in the preset media content presentation page is switched to the target media content in the favorites set of the current user.

In the above embodiment, when updated content exists in the favorites set of the current user or the preset subset of the favorites set of the current user, a media content stream of the preset media content presentation page containing at least part of the updated content in the favorites set/preset subset may be generated, and the media content may be presented in the preset media content presentation page based on the media content stream. For example, in response to the fourth display operation for the preset media content presentation page, the first media content in the media content stream is presented in the preset media content presentation page; and in response to the media content switching operation acting on the preset media content presentation page, the media content presented in the preset media content presentation page is switched based on the media content stream switching and the media content switching operation.

At this time, optionally, before the presenting the target updated content in the favorites set on the preset media content presentation page, the method further includes: adding at least part of the updated content in the favorites set to a media content stream of the preset media content presentation page, wherein the at least part of the updated content includes updated content in a third subset or updated content in a subset with the updated content, the preset media content presentation page supports switching to present different content in the media content stream based on a media content switching operation, and the media content switching operation includes the preset media content switching operation.

**In** this embodiment, in addition to being used to present at least part of the media content published by the associated user of the current user, the preset media content presentation page may also be used to present at least part of the updated content in the favorites set of the current user, so as to further enrich functions of the preset media content presentation page.

Exemplarily, the preset media content presentation page may be used to present the updated content in at least a part of subsets in the favorites set; for example, the subset where the updated content is located is ignored, and when updated content exists in the favorites set of the current user, that is, when the media content stream of the preset media content presentation page is generated or updated, at least part of the updated content existsing in the favorites set may be added to the media content stream.

The preset media content presentation page can also be used to present the updated content in the preset subset (such as the third subset) in the favorites set, but not be used to present the updated content in other subsets except the preset subset; for example, the subset where the updated content is located may be considered, and only when updated content exists in the preset subset in the favorites set of the current user, at least part of the updated content existsing in the preset subset is added to the media content stream when the media content stream of the preset media content presentation page is generated or updated.

The updated content added to the media content stream of the preset media content presentation page may or may not include the updated content that the user has watched (for example, the updated content that the user has watched at least part of its content in other pages through other channels). Optionally, the updated content added to the media content stream of the preset media content presentation page may not include the updated content that the user has watched, that is, only at least part of the updated content that the user has not watched is added to the media content stream of the preset media content presentation page. The preset subset (such as the third subset) may be set as required. Optionally, the third subset includes a set of favorites folders followed by the current user. There may be one or more favorites folders in the set of favorites folders followed by the current user, and the one or more favorites folders are favorites folders followed by the current user. The favorites folders followed by the current user may be understood as favorites folders favorited by the current user, which may be favorites folders created by other users except the current user in the current application program. At this time, the current user may or may not have a preset association relationship with a creator of a favorites folder followed by the current user, for example, the current user may or may not have followed the creator of the favorites folder that the current user is interested in.

In some implementations, after the presenting the target updated content in the favorites set on the preset media content presentation page, the method further includes: in response to a favorites folder display operation acting on the preset media content presentation page, displaying content information of at least part of favorites content in a target favorites folder, wherein the target favorites folder is a favorites folder where the target updated content is located, and the target favorites folder is a favorites folder followed by the current user.

The favorites folder display operation may be a trigger operation for instructing the display of the target favorites folder, such as a gesture operation acting on the preset media content presentation page, or an operation of triggering a favorites folder display control displayed on the preset media content presentation page. The target favorites folder may be a favorites folder where the currently displayed media content on the preset media content presentation page resides and which the current user follows. The favorites folder display control may be displayed when the content presented in the preset page is the content in a certain favorites folder followed by the current user. The content information of certain favorites content may be understood as information of the favorites content, such as identifier information of the favorites content.

In the above embodiment, when the target content presented on the preset media content presentation page is the content in the favorites folder followed by the user, a favorites folder presentation control 30 may be further presented on the preset media content presentation page, as shown in FIG. 3. Therefore, when the current user wants to view the content information of the favorites content in the target favorites folder, the current user may trigger the favorites folder presentation control 30. Accordingly, when detecting that the current application program triggers the favorites folder presentation control 30, the current application program can determine that the favorites folder display operation is received, and the content information of at least part of the favorites content in the target favorites folder is displayed in response to the favorites folder display operation.

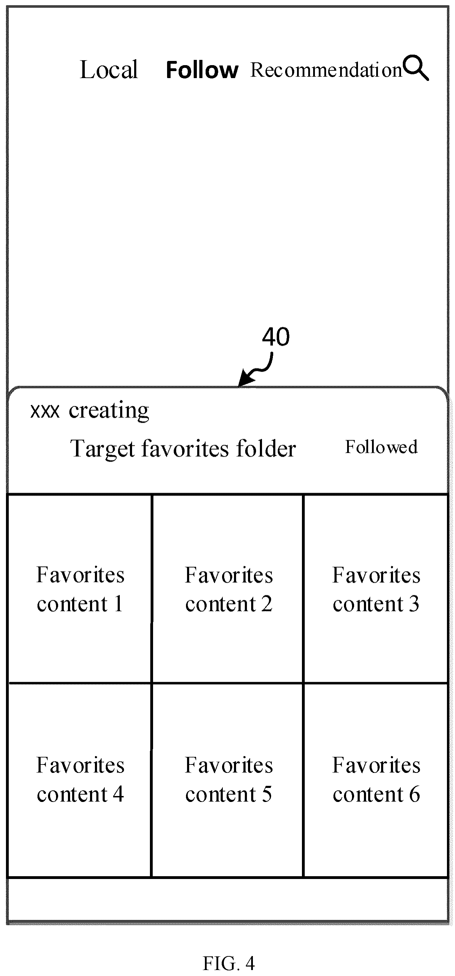

The display mode of the content information of at least part of the favorites content in the target favorites folder may be flexibly set, for example, the current page may be switched from the preset media content presentation page to a presentation page of the target favorites folder, and the content information of at least part of the favorites content in the target favorites folder may be presented in the presentation page. Optionally, as shown in FIG. 4, a favorites folder panel 40 of the target favorites folder may be presented on the preset media content presentation page, and the content information of at least part of the favorites content in the target favorites folder may be presented in the favorites folder panel 40, so that the user can continue to watch the target updated content or watch the media content in the preset media content presentation page.

Furthermore, information such as a nickname of a creator of the target favorites folder, and/or, the number of viewers or followers of the target favorites folder, may be further displayed in the favorites folder panel of the target favorites folder. When the content information of the target updated content is displayed in the favorites folder panel of the target favorites folder, it may carry a preset identifier, thus indicating the content information of the target updated content currently watched by the user in the favorites folder panel of the target favorites folder through the preset identifier.

The interaction method provided in this embodiment includes: receiving a preset trigger operation of a current user; and presenting update information of a favorites set of the current user in response to the preset trigger operation, wherein the update information includes at least one selected from the group consisting of update prompt information and target updated content, the favorites set is a complete set of favorites content of the current user, the update prompt information is presented at an associated position of a favorite identifier corresponding to the favorites set, and the update prompt information may be configured to prompt that updated content exists in the favorites set, the target updated content is presented within a preset media content presentation page, and the preset media content presentation page is a presentation page of media content that is published by an associated user of the current user. In this embodiment, with the adoption of the above technical solution, by presenting favorite prompt information at the associated position of the favorite identifier corresponding to the favorites set or presenting the target updated content in the favorites set on the preset media content presentation page, the interaction modes when the user determines whether updated content exists in the favorites set and views the updated content in the favorites set can be enriched, the interaction modes related to the updated content in the favorites content of the user can be further enriched, and operations required for the user to determine whether updated content exists in the favorites set and to view the updated content in the favorites set can be simplified, thus improving the user experience.

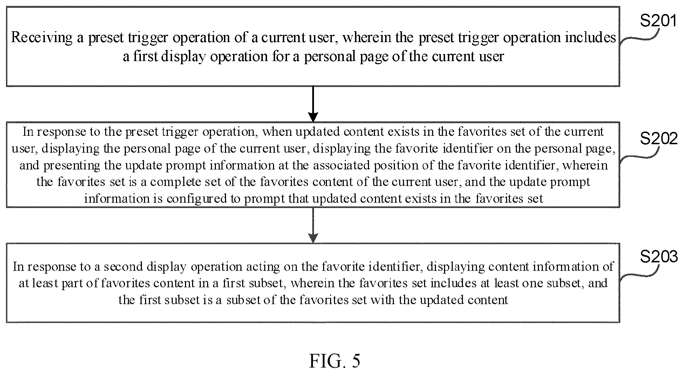

FIG. 5 is a schematic flowchart of another interaction method provided by an embodiment of the present disclosure. The solution in this embodiment may be combined with one or more alternatives in the above embodiments. Optionally, the preset trigger operation includes a first display operation for a personal page of the current user, and the presenting update information of a favorites set of the current user includes: in response to updated content existsing in the favorites set of the current user, displaying the personal page of the current user, displaying the favorite identifier on the personal page, and presenting the update prompt information at the associated position of the favorite identifier.

Optionally, after the presenting the update prompt information at the associated position of the favorite identifier, the method further includes: in response to a second display operation acting on the favorite identifier, displaying content information of at least part of favorites content in a first subset, wherein the favorites set includes at least one subset, and the first subset is a subset of the favorites set with the updated content.

Accordingly, as shown in FIG. 5, the interaction method provided by this embodiment may include:
S201: receiving a preset trigger operation of a current user, wherein the preset trigger operation includes a first display operation for a personal page of the current user.
S202: in response to the preset trigger operation, when updated content exists in the favorites set of the current user, displaying the personal page of the current user, displaying the favorite identifier on the personal page, and presenting the update prompt information at the associated position of the favorite identifier, wherein the favorites set is a complete set of the favorites content of the current user, and the update prompt information is configured to prompt that updated content exists in the favorites set.

In this embodiment, when updated content exists in the favorites set of the current user, the update prompt information may be presented at the associated position of the favorite identifier displayed on the personal page of the current user, so as to prompt the current user that updated content existst in the favorites set through the update prompt information.

Exemplarily, when the first display operation for the personal page of the current user is received, it may be judged whether updated content exists in the favorites set of the current user; if so, the personal page of the current user is displayed in response to the first display operation, the favorite identifier 20 corresponding to the favorites set of the current user is displayed on the personal page, and the update prompt information is presented at the associated position of the favorite identifier 20, as shown in FIG. 2.

Furthermore, if it is judged that there updated content does not exist in the favorites set of the current user, the personal page of the current user may be displayed in response to the first display operation, and the favorite identifier corresponding to the favorites set of the current user may be displayed on the personal page. At this time, the update prompt information may not be presented at the associated position of the favorite identifier.

In this embodiment, the update prompt information may include at least one selected from the group consisting of first update prompt information and second update prompt information. The first update prompt information and the second update prompt information may be update prompt information corresponding to the favorites set of the current user. The first update prompt information may be understood as update prompt information that remains presented at the associated position of the favorite identifier after being presented, until a second display operation acting on the favorite identifier is received, that is, the first update prompt information, after presented, will remain presented at the associated position of the favorite identifier until the second display operation acting on the favorite identifier is received. The second update prompt information may be understood as update prompt information that will be canceled when a preset condition is met if the second display operation acting on the favorite identifier has not been received yet. The preset condition may include that, for example, a presentation duration of the second update prompt information reaches a preset duration, a presentation-canceling operation acting on the second update prompt information is received, or other trigger operations acting on the personal page of the current user other than the second display operation are received, and so on.

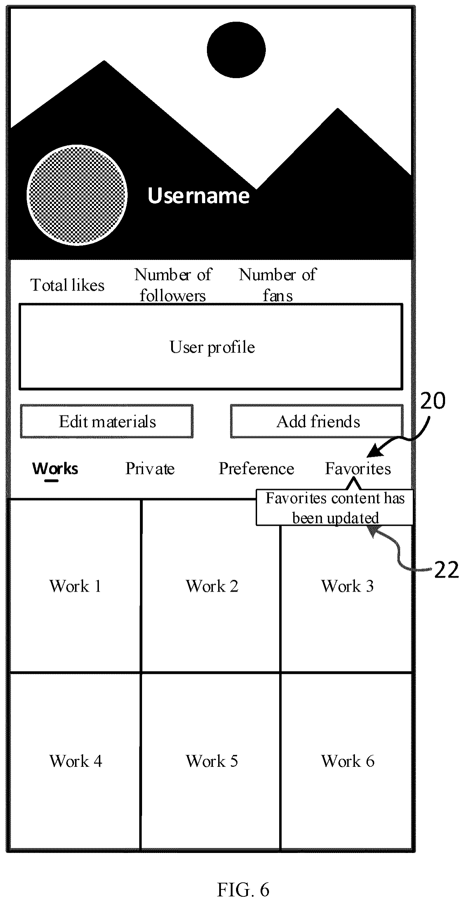

Exemplarily, in response to receiving a first display operation, as shown in FIG. 2, a first update prompt information 21 may be displayed at a certain associated position (such as a first associated position) of the favorite identifier 20 until a second display operation acting on the favorite identifier 20 is received; or, as shown in FIG. 6, the second update prompt information 22 is presented at a certain associated position (such as a second associated position) of the favorite identifier 20, and the presentation of the second update prompt information 22 is canceled when the set condition is met or the second display operation is received.

In this embodiment, after the presentation of the second update prompt information is canceled, the first update prompt information may not be presented any longer; or if the second display operation has not been received yet, the first update prompt information may be displayed after the presentation of the second update prompt information is canceled, that is, the presentation is switched from the second update prompt information to the first update prompt information.

At this time, optionally, the presenting the update prompt information at the associated position of the favorite identifier includes: displaying first update prompt information at a first associated position of the favorite identifier; or, presenting second update prompt information at a second associated position of the favorite identifier, and switching from presenting the second update prompt information to first update prompt information when a preset switching condition is met, wherein the first update prompt information is presented at the first associated position of the favorite identifier.

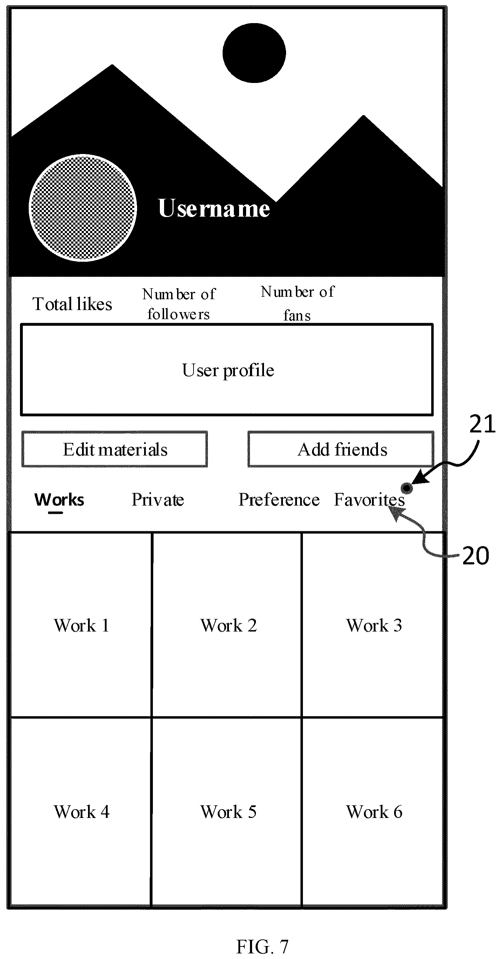

The first associated position and the second associated position may be positions associated with the display position of the favorite identifier, and the first associated position and the second associated position may be the same or different associated positions of the favorite identifier, which may be specifically set as required. The preset switching condition may be set flexibly, for example, the preset switching condition may be set such that a presentation duration of second associated prompt information reaches a set duration, and so on. This embodiment does not limit presentation styles of the first update prompt information and the second update prompt information. Exemplarily, the first update prompt information may be a preset graphic, a preset character or a combination of the preset graphic and the preset character. For example, the first update prompt information may be displayed as a dot without characters (as shown in FIG. 7) or a dot with characters (as shown in FIG. 2).

S203: in response to a second display operation acting on the favorite identifier, displaying content information of at least part of favorites content in a first subset, wherein the favorites set includes at least one subset, and the first subset is a subset of the favorites set with the updated content.

The first subset may be a certain subset with updated content in the favorites set. The conditions for judging whether updated content exists in a certain subset may be set flexibly. For example, when the subset of favorites folders followed by the user contains a favorites folder with updated content, it may be judged that updated content exists in the subset of favorites folders followed by the user; when a distance between a current position/preset position of the user and a place favorited by the user is less than or equal to a preset distance or updated commodities exist in the place favorited by the user, it may be judged that updated content exists in a subset of places favorited by the user; when a price of a group purchase favorited by the user changes or when the distance between the current position/preset position of the user and a place where the group purchase favorited by the user belongs is less than or equal to a preset distance, it may be determined that updated content exists in a subset of group purchases favorited by the user; when a price of a commodity favorited by the user changes, it may be judged that updated content exists in a subset of commodities favorited by the user; when a newly released message exists in a topic/hotspot favorited by the user, it may be judged that updated content exists in a subset of topics/hotspots favorited by the user; and when there is new content in a subset of short plays favorited by the user, it may be judged that updated content exists in a subset of short plays favorited by the user, and so on.

In this embodiment, in response to receiving the second display operation acting on the favorite identifier, a certain subset of the favorites set with updated content may be automatically located, that is, the certain subset with the updated content may be automatically displayed, so as to facilitate the user to view the updated content in the favorites set.

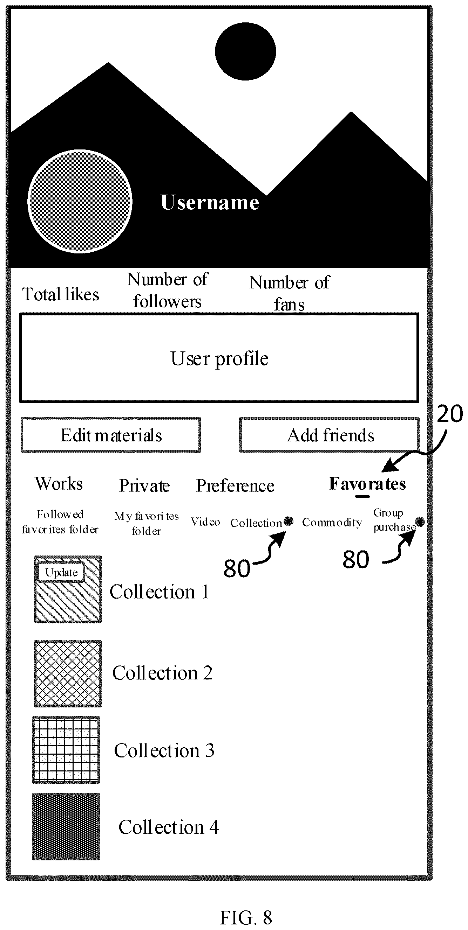

Exemplarily, as shown in FIG. 8, in response to receiving the second display operation acting on the favorite identifier 22, the content information of at least part of the favorites content in the first subset with the updated content (in FIG. 8, the first subset is taken as the subset of the favorites collection of the user as an example) may be displayed.

When presenting the content information of the favorites content in a certain subset (such as the first subset or a second subset) with the updated content, the content information of the updated content in the subset and content information of non-updated content in the subset may have different presentation styles, for example, the content information of the updated content may carry an update identifier (the word "update" as shown in the upper left corner of Collection 1 in FIG. 8), so as to indicate the updated content in the subset through the update identifier.

In this embodiment, in response to receiving the second display operation acting on the favorite identifier, the update prompt information displayed at the associated position of the favorite identifier may remain displayed; optionally, the presentation of the update prompt information (such as the first update prompt information or the second update prompt information) presented at the associated position of the favorite identifier may also be canceled. At this time, the interaction method provided by this embodiment can further include: in response to the second display operation acting on the favorite identifier, canceling the presentation of the update prompt information.

In this embodiment, in response to receiving the second display operation acting on the favorite identifier, subset identifiers corresponding to the at least a part of the subsets in the favorites set can also be displayed on the personal page, so as to facilitate the user to view the content information of the favorites content in the corresponding subset by triggering a certain subset identifier. The at least a part of the subsets may include a first subset. Exemplarily, as shown in FIG. 8, the subset identifier corresponding to the at least a part of the subsets may be displayed below the favorite identifier, such as displayed in a navigation region of the favorites set. In response to receiving the second display operation acting on the favorite identifier, third update prompt information corresponding to the subset with the updated content may be displayed or not displayed on the personal page. Optionally, the interaction method provided by this embodiment further includes: in response to the second display operation acting on the favorite identifier, displaying third update prompt information corresponding to a subset with at least part of the updated content, wherein the subset with at least part of the updated content includes the first subset, and the third update prompt information is configured to prompt that the updated content exists in the corresponding subset, so as to facilitate the user to quickly determine that a subset with the updated content exists in the favorites set.

Third update prompt information 80 may be prompt information corresponding to a subset in the favorites folder, and the third update prompt information 80 may be used for prompting that updated content exists in the corresponding subset. Exemplarily, when the updated content exists in a certain subset, the third update prompt information 80 corresponding to the subset may be displayed at the associated position of the subset identifier of the subset, such as the third update prompt information 80 displayed at the associated positions of the subset identifiers "Collection" and the subset identifier "Group Purchase" as shown in FIG. 8 (the third update prompt information is presented in the form of dots in FIG. 8 as an example). This embodiment does not limit the display style of the third update prompt information 80.

In this embodiment, when a certain subset with the updated content is automatically located in response to the second display operation acting on the favorite identifier, the display of the third update prompt information corresponding to the subset may be immediately canceled or not immediately canceled, which may be specifically set as required.

Before the second display operation is performed, the user has no expectation of the subset that is located in response to the second display operation, that is, the user may not know which subset in the favorites set can be located when performing the second display operation, and the subsets that are located when the user performs the second display operation at different times may be different, so that when the content information of the favorites content contained in a certain subset is displayed in response to the second display operation, the display of the third update prompt information corresponding to the subset may be kept, and when a display duration of the third update prompt information corresponding to the subset reaches a preset duration, the display of the third update prompt information corresponding to the subset may be canceled, and the currently displayed subset is prompted to the user by the switching of the third update prompt information from being displayed to not being displayed after the preset duration. At this time, optionally, after the displaying third update prompt information corresponding to a subset with at least part of the updated content, the method further includes: in response to a display duration of the third update prompt information corresponding to the first subset reaching a preset duration, canceling the display of the third update prompt information corresponding to the first subset. The preset duration may be set as required.

In this embodiment, when the content information of the favorites content contained in a certain subset is displayed in response to a display operation of the user for the certain subset, if the third update prompt information corresponding to the subset is displayed on the personal page of the current user before the display operation is received, the display of the third update prompt information corresponding to the subset may be canceled in response to the display operation, that is, the display of the third update prompt information corresponding to the subset may be canceled when the display operation for the subset is received. At this time, optionally, after the displaying third update prompt information corresponding to a subset with at least part of the updated content, the method further includes: in response to a third display operation for a second subset, displaying content information of at least part of favorites content in the second subset, and canceling the display of the third update prompt information corresponding to the second subset.

The third display operation may be a trigger operation for instructing the display of the content information of at least part of the favorites content in a certain subset, such as an operation of triggering a subset identifier of a certain subset or a subset switching operation acting on a personal page. The second subset may be understood as a subset corresponding to the third display operation, which may be the same as or different from the first subset. The subset switching operation may be an operation for instructing the switching of the displayed subset, such as a horizontal swipe operation acting on the personal page.

According to the interaction method provided by this embodiment, the update prompt information is displayed at the associated position of the favorite identifier, and in response to receiving the second display operation acting on the favorite identifier, the content information of the favorites content contained in the subset with the updated content is preferentially displayed, so that the operations required for the user to determine whether updated content exists in the favorites set and to view the content information of the updated content contained in the favorites set may be simplified, thus improving the user experience.

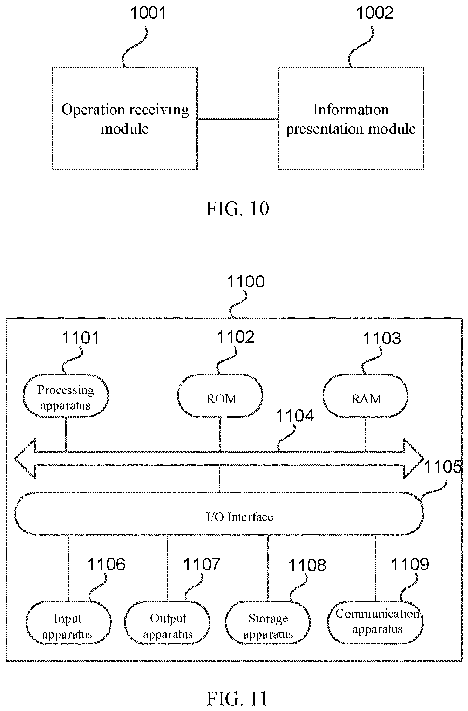

FIG. 10 is a structural block diagram of an interaction apparatus provided by an embodiment of the present disclosure. The apparatus may be implemented by software and/or hardware, and may be configured in an electronic device, for example, in a mobile phone or a tablet computer, and the update information of the favorites set of the user may be presented by executing the interaction method. As shown in FIG. 10, the interaction apparatus provided by this embodiment may include:
an operation receiving module 1001, configured to receive a preset trigger operation of a current user; and
an information presentation module 1002, configured to present update information of a favorites set of the current user in response to the preset trigger operation, wherein the update information includes at least one selected from the group consisting of update prompt information and target updated content, the favorites set is a complete set of favorites content of the current user, the update prompt information is presented at an associated position of a favorite identifier corresponding to the favorites set, and the update prompt information is configured to prompt that updated content exists in the favorites set, the target updated content is presented within a preset media content presentation page, and the preset media content presentation page is a presentation page of media content published by an associated user of the current user.

According to the interaction apparatus provided in this embodiment, a preset trigger operation of a current user is received by the operation receiving module; and update information of a favorites set of the current user is presented by the information presentation module in response to the preset trigger operation, wherein the update information includes update prompt information and target updated content, the favorites set is a complete set of favorites content of the current user, the update prompt information is presented at an associated position of a favorite identifier corresponding to the favorites set, and the update prompt information may be used for prompting that there is updated content in the favorites set, the target updated content is presented within a preset media content presentation page, and the preset media content presentation page is a presentation page of media content that is published by an associated user of the current user. In this embodiment, with the adoption of the above technical solution, by presenting favorite prompt information at the associated position of the favorite identifier corresponding to the favorites set or presenting the target updated content in the favorites set on the preset media content presentation page, the interaction modes when the user determines whether updated content exists in the favorites set and views the updated content in the favorites set can be enriched, the interaction modes related to the updated content in the favorites content of the user can be further enriched, and operations required for the user to determine whether updated content exists in the favorites set and to view the updated content in the favorites set can be simplified, thus improving the user experience.

In the above solution, the preset trigger operation may include a first display operation for a personal page of the current user, and the information presentation module 1002 may include: an update prompt unit, configured to: in response to updated content existsing in the favorites set of the current user, display the personal page of the current user, display the favorite identifier on the personal page, and present the update prompt information at the associated position of the favorite identifier.

In the above solution, the update prompt unit may be configured to: present first update prompt information at a first associated position of the favorite identifier; or, present second update prompt information at a second associated position of the favorite identifier, and switch from presenting the second update prompt information to first update prompt information when a preset switching condition is met, wherein the first update prompt information is presented at the first associated position of the favorite identifier.

Further, the interaction apparatus provided by this embodiment may further include: a subset display module, configured to display, after the presenting the update prompt information at the associated position of the favorite identifier, content information of at least part of favorites content in a first subset in response to a second display operation acting on the favorite identifier, wherein the favorites set includes at least one subset, and the first subset is a subset of the favorites set with the updated content.

In the above solution, the subset display module may also be configured to perform at least one selected from the group consisting of the following: in response to the second display operation acting on the favorite identifier, canceling presentation of the update prompt information; in response to the second display operation acting on the favorite identifier, displaying third update prompt information corresponding to a subset with at least part of the updated content, wherein the subset with at least part of the updated content includes the first subset, and the third update prompt information is configured to prompt that updated content exists in the corresponding subset.

Further, the interaction apparatus provided by this embodiment may further include: a first display canceling module, configured to cancel, after the displaying third update prompt information corresponding to a subset with at least part of the updated content, display of the third update prompt information corresponding to the first subset in response to a display duration of the third update prompt information corresponding to the first subset reaching a preset duration.

Further, the interaction apparatus provided by this embodiment may further include: a second display canceling module, configured to: after the displaying third update prompt information corresponding to a subset with at least part of the updated content, in response to a third display operation for a second subset, display content information of at least part of favorites content in the second subset, and cancel display of the third update prompt information corresponding to the second subset.

In the above solution, the preset trigger operation includes at least one selected from the group consisting of the fourth display operation for the preset media content presentation page and the preset media content switching operation acting on the media content presentation page, and the information presentation module 1002 may include: a content presentation unit, configured to present the target updated content in the favorites set on the preset media content presentation page.

Further, the interaction apparatus provided by this embodiment may further include: a content adding module, configured to add, before the presenting the target updated content in the favorites set on the preset media content presentation page, at least part of the updated content in the favorites set to a media content stream of the preset media content presentation page, wherein the at least part of the updated content includes updated content in a third subset or updated content in a subset with the updated content, the preset media content presentation page supports switching to present different content in the media content stream based on a media content switching operation, and the media content switching operation includes the preset media content switching operation.

In the above solution, the third subset may include a set of favorites folders followed by the current user.

Further, the interaction apparatus provided by this embodiment may further include: a favorites folder display module, configured to display, after the presenting the target updated content in the favorites set on the preset media content presentation page, content information of at least part of favorites content in a target favorites folder in response to a favorites folder display operation acting on the preset media content presentation page, wherein the target favorites folder is a favorites folder where the target updated content is located, and the target favorites folder is a favorites folder followed by the current user.

The interaction apparatus provided by the embodiment of the present disclosure can execute the interaction method provided by any of the embodiments of the present disclosure, and has corresponding functional modules and beneficial effects for executing the interaction method. For technical details not elaborated in this embodiment, reference may be made to the interaction method provided in any embodiment of the present disclosure.

Referring to FIG. 11, FIG. 11 illustrates a schematic structural diagram of an electronic device (such as a terminal device) 1100 suitable for implementing some embodiments of the present disclosure. The terminal device in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device illustrated in FIG. 11 is merely an example, and should not pose any limitation to the functions and the range of use of the embodiments of the present disclosure.

As illustrated in FIG. 11, the electronic device 1100 may include a processing apparatus 1101 (e.g., a central processing unit, a graphics processing unit, etc.), which can perform various suitable actions and processing according to a program stored in a read-only memory (ROM) 1102 or a program loaded from a storage apparatus 1108 into a random-access memory (RAM) 1103. The RAM 1103 further stores various programs and data required for operations of the electronic device 1100. The processing apparatus 1101, the ROM 1102, and the RAM 1103 are interconnected by means of a bus 1104. An input/output (I/O) interface 1105 is also connected to the bus 1104.

Usually, the following apparatus may be connected to the I/O interface 1105: an input apparatus 1106 including, for example, a touch screen, a touch pad, a keyboard, a mouse, a camera, a microphone, an accelerometer, a gyroscope, or the like; an output apparatus 1107 including, for example, a liquid crystal display (LCD), a loudspeaker, a vibrator, or the like; a storage apparatus 1108 including, for example, a magnetic tape, a hard disk, or the like; and a communication apparatus 1109. The communication apparatus 1109 may allow the electronic device 1100 to be in wireless or wired communication with other devices to exchange data. While FIG. 11 illustrates the electronic device 1100 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 1109 and installed, or may be installed from the storage apparatus 1108, or may be installed from the ROM 1102. When the computer program is executed by the processing apparatus 1101, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: receive a preset trigger operation of a current user; and present update information of a favorites set of the current user in response to the preset trigger operation, wherein the update information includes at least one selected from the group consisting of update prompt information and target updated content, the favorites set is a complete set of favorites content of the current user, the update prompt information is presented at an associated position of a favorite identifier corresponding to the favorites set, the update prompt information is configured to prompt that updated content exists in the favorites set, the target updated content is presented within a preset media content presentation page, and the preset media content presentation page is a presentation page of media content published by an associated user of the current user.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of the module does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present application, Example 1 provides an interaction method, and this method includes:
Receiving a preset trigger operation of a current user; and
Presenting update information of a favorites set of the current user in response to the preset trigger operation, wherein the update information includes at least one selected from the group consisting of update prompt information and target updated content, the favorites set is a complete set of favorites content of the current user, the update prompt information is presented at an associated position of a favorite identifier corresponding to the favorites set, the update prompt information is configured to prompt that updated content exists in the favorites set, the target updated content is presented within a preset media content presentation page, and the preset media content presentation page is a presentation page of media content published by an associated user of the current user.

According to one or more embodiments of the present disclosure, in Example 2 according to the method of Example 1, the preset trigger operation includes a first display operation for a personal page of the current user, and the presenting update information of a favorites set of the current user includes:
in response to updated content existsing in the favorites set of the current user, displaying the personal page of the current user, displaying the favorite identifier on the personal page, and presenting the update prompt information at the associated position of the favorite identifier.

According to one or more embodiments of the present application, in Example 3 according to the method of Example 2, the presenting the update prompt information at the associated position of the favorite identifier includes:
presenting first update prompt information at a first associated position of the favorite identifier; or
presenting second update prompt information at a second associated position of the favorite identifier, and switching from presenting the second update prompt information to first update prompt information when a preset switching condition is met, wherein the first update prompt information is presented at the first associated position of the favorite identifier.

According to one or more embodiments of the present application, in Example 4 according to the method of Example 2, after the presenting the update prompt information at the associated position of the favorite identifier, the method further includes:
in response to a second display operation acting on the favorite identifier, displaying content information of at least part of favorites content in a first subset, wherein the favorites set includes at least one subset, and the first subset is a subset of the favorites set with the updated content.

According to one or more embodiments of the present application, Example 5 according to the method of Example 4, further includes at least one selected from the group consisting of:
in response to the second display operation acting on the favorite identifier, canceling presentation of the update prompt information;
in response to the second display operation acting on the favorite identifier, displaying third update prompt information corresponding to a subset with at least part of the updated content, wherein the subset with at least part of the updated content includes the first subset, and the third update prompt information is configured to prompt that the updated content exists in the corresponding subset.

According to one or more embodiments of the present application, in Example 6 according to the method of Example 5, after the displaying third update prompt information corresponding to a subset with at least part of the updated content, the method further includes:
in response to a display duration of the third update prompt information corresponding to the first subset reaching a preset duration, canceling display of the third update prompt information corresponding to the first subset.

According to one or more embodiments of the present application, in Example 7 according to the method of Example 5, after the displaying third update prompt information corresponding to a subset with at least part of the updated content, the method further includes:
in response to a third display operation for a second subset, displaying content information of at least part of favorites content in the second subset, and canceling display of the third update prompt information corresponding to the second subset.

According to one or more embodiments of the present application, in Example 8 according to the method of Example 1, the preset trigger operation includes at least one selected from the group consisting of a fourth display operation for the preset media content presentation page and a preset media content switching operation acting on the media content presentation page, and the presenting update information of a favorites set of the current user includes:
presenting the target updated content in the favorites set on the preset media content presentation page.

According to one or more embodiments of the present application, in Example 9 according to the method of Example 8, before the presenting the target updated content in the favorites set on the preset media content presentation page, the method further includes:
adding at least part of the updated content in the favorites set to a media content stream of the preset media content presentation page, wherein the at least part of the updated content includes updated content in a third subset or updated content in a subset with the updated content, the preset media content presentation page supports switching to present different content in the media content stream based on a media content switching operation, and the media content switching operation includes the preset media content switching operation.

According to one or more embodiments of the present application, in Example 10 according to the method of Example 9, the third subset includes a set of favorites folders followed by the current user.

According to one or more embodiments of the present application, in Example 11 according to the method of Example 8, after the presenting the target updated content in the favorites set on the preset media content presentation page, the method further includes:
in response to a favorites folder display operation acting on the preset media content presentation page, displaying content information of at least part of favorites content in a target favorites folder, wherein the target favorites folder is a favorites folder where the target updated content is located, and the target favorites folder is a favorites folder followed by the current user.

According to one or more embodiments of the present application, Example 12 provides an interaction apparatus, and this apparatus includes:
an operation receiving module, configured to receive a preset trigger operation of a current user; and
an information presentation module, configured to present update information of a favorites set of the current user in response to the preset trigger operation, wherein the update information includes at least one selected from the group consisting of update prompt information and target updated content, the favorites set is a complete set of favorites content of the current user, the update prompt information is presented at an associated position of a favorite identifier corresponding to the favorites set, the update prompt information is configured to prompt that updated content exists in the favorites set, the target updated content is presented within a preset media content presentation page, and the preset media content presentation page is a presentation page of media content published by an associated user of the current user.

According to one or more embodiments of the present application, Example 13 provides an electronic device, and this electronic device includes:
at least one processor; and
a memory communicatively connected to the at least one processor,
wherein the memory stores a computer program executable by the at least one processor, and the computer program is executed by the at least one processor to cause the at least one processor to perform the interaction method of any one of Examples 1-11.

According to one or more embodiments of the present application, Example 14 provides a computer-readable storage medium storing a computer program, wherein the computer program, when executed by a processor, is configured to implement the interaction method according to any one of Examples 1-11.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. An interaction method, comprising:
receiving a preset trigger operation of a current user; and
presenting update information of a favorites set of the current user in response to the preset trigger operation, wherein the update information comprises at least one selected from the group consisting of update prompt information and target updated content, the favorites set is a complete set of favorites content of the current user, the update prompt information is presented at an associated position of a favorite identifier corresponding to the favorites set, the update prompt information is configured to prompt that updated content exists in the favorites set, the target updated content is presented within a preset media content presentation page, and the preset media content presentation page is a presentation page of media content published by an associated user of the current user.

2. The method according to claim 1, wherein the preset trigger operation comprises a first display operation for a personal page of the current user, and the presenting update information of a favorites set of the current user comprises:
in response to updated content existing in the favorites set of the current user, displaying the personal page of the current user, displaying the favorite identifier on the personal page, and presenting the update prompt information at the associated position of the favorite identifier.

3. The method according to claim 2, wherein the presenting the update prompt information at the associated position of the favorite identifier comprises:
presenting first update prompt information at a first associated position of the favorite identifier; or
presenting second update prompt information at a second associated position of the favorite identifier, and switching from presenting the second update prompt information to first update prompt information when a preset switching condition is met, wherein the first update prompt information is presented at the first associated position of the favorite identifier.

4. The method according to claim 2 or 3, wherein, after the presenting the update prompt information at the associated position of the favorite identifier, the method further comprises:
in response to a second display operation acting on the favorite identifier, displaying content information of at least part of favorites content in a first subset, wherein the favorites set comprises at least one subset, and the first subset is a subset of the favorites set with the updated content.

5. The method according to claim 4, further comprising at least one selected from the group consisting of:
in response to the second display operation acting on the favorite identifier, canceling presentation of the update prompt information; and
in response to the second display operation acting on the favorite identifier, displaying third update prompt information corresponding to a subset with at least part of the updated content, wherein the subset with at least part of the updated content comprises the first subset, and the third update prompt information is configured to prompt that the updated content exists in the corresponding subset.

6. The method according to claim 5, wherein, after the displaying third update prompt information corresponding to a subset with at least part of the updated content, the method further comprises:
in response to a display duration of the third update prompt information corresponding to the first subset reaching a preset duration, canceling display of the third update prompt information corresponding to the first subset.

7. The method according to claim 5 or 6, wherein, after the displaying third update prompt information corresponding to a subset with at least part of the updated content, the method further comprises:
in response to a third display operation for a second subset, displaying content information of at least part of favorites content in the second subset, and canceling display of the third update prompt information corresponding to the second subset.

8. The method according to any one of claims 1-7, wherein the preset trigger operation comprises at least one selected from the group consisting of a fourth display operation for the preset media content presentation page and a preset media content switching operation acting on the media content presentation page, and the presenting update information of a favorites set of the current user comprises:
presenting the target updated content in the favorites set on the preset media content presentation page.

9. The method according to claim 8, wherein, before the presenting the target updated content in the favorites set on the preset media content presentation page, the method further comprises:
adding at least part of the updated content in the favorites set to a media content stream of the preset media content presentation page, wherein the at least part of the updated content comprises updated content in a third subset or updated content in a subset with the updated content, the preset media content presentation page supports switching to present different content in the media content stream based on a media content switching operation, and the media content switching operation comprises the preset media content switching operation.

10. The method according to claim 9, wherein the third subset comprises a set of favorites folders followed by the current user.

11. The method according to any one of claims 8-10, wherein, after the presenting the target updated content in the favorites set on the preset media content presentation page, the method further comprises:
in response to a favorites folder display operation acting on the preset media content presentation page, displaying content information of at least part of favorites content in a target favorites folder, wherein the target favorites folder is a favorites folder where the target updated content is located, and the target favorites folder is a favorites folder followed by the current user.

12. An interaction apparatus, comprising:
an operation receiving module, configured to receive a preset trigger operation of a current user; and
an information presentation module, configured to present update information of a favorites set of the current user in response to the preset trigger operation, wherein the update information comprises at least one selected from the group consisting of update prompt information and target updated content, the favorites set is a complete set of favorites content of the current user, the update prompt information is presented at an associated position of a favorite identifier corresponding to the favorites set, the update prompt information is configured to prompt that updated content exists in the favorites set, the target updated content is presented within a preset media content presentation page, and the preset media content presentation page is a presentation page of media content published by an associated user of the current user.

13. An electronic device, comprising:
at least one processor; and
a memory communicatively connected to the at least one processor, wherein the memory stores a computer program executable by the at least one processor, and the computer program is executed by the at least one processor to cause the at least one processor to perform the interaction method according to any one of claims 1-11.

14. A computer-readable storage medium storing computer instructions, wherein the computer instructions, when executed by a processor, are configured to implement the interaction method according to any one of claims 1-11.
